# EUROPEAN PATENT APPLICATION

(11) **EP 3 922 966 A1**
(43) Date of publication of application: **15.12.2021**
(21) Application number: 19914374.4
(22) Date of filing: 06.02.2019
(51) Int. Cl.: G01J 3/51, G02B 5/20, G02B 5/30, G06T 1/00, H04N 5/225

(54) **FILTER LEARNING DEVICE, FILTER LEARNING METHOD, AND NON-TRANSITORY COMPUTER-READABLE MEDIUM**

(71) Applicant: NEC Corporation, 108-8001 Tokyo (JP)
(72) Inventor: TOIZUMI Takahiro, Tokyo 108-8001 (JP); TSUKADA Masato, Tokyo 108-8001 (JP)
(74) Representative: Betten & Resch
(86) International application number: PCT/JP2019/004172
(87) International publication number: WO 2020/161812

(57) **Abstract**

An object is to provide a filter learning device capable of optimizing recognition processing using features obtained from the characteristics of light. The filter learning device (10) according to the present disclosure includes an optical filter unit (11) for extracting a filter image from an image for learning by using a filter condition determined according to a filter parameter, a parameter updating unit (12) for updating the filter parameter with a result obtained by executing image analysis processing on the filter image, and a sensing unit (13) for sensing an input image by using a physical optical filter that satisfies a filter condition determined according to the updated filter parameter.

## Description

### Technical Field

This disclosure relates to a filter learning device, a filter learning method, and a non-transitory computer-readable medium.

### Background Art

Current deep learning techniques including a convolutional neural network, etc. are applied to various applications such as image recognition, object detection, segmentation, and anomaly detection.

Current deep learning techniques are mainly used to optimize recognition processing on images obtained by cameras having RGB filters. Patent Literature 1 discloses a configuration of a recognition device that performs filtering processing on an input image and detects a feature quantity as a result of the filtering processing. The recognition device of Patent Literature 1 executes a score calculation by using a detected feature quantity and a discriminator, and detects a person from the input image based on a result of the score calculation. The filtering processing in Patent Literature 1 is executed by using a convolution filter.

### Citation List

### Non-Patent Literature

[Non-Patent Literature 1] Japanese Unexamined Patent Application Publication No. 2010-266983

### Summary of Invention

### Technical Problem

The filtering processing to be executed in the recognition device disclosed in Patent Literature 1 uses a convolution filter. Therefore, in Patent Literature 1, filtering processing related to image data output from an image sensor or the like is mainly executed. Therefore, the recognition device disclosed in Patent Literature 1 has a problem that it cannot be used to optimize the recognition processing using features obtained from the characteristics of light such as a reflection characteristic of wavelengths which a recognition target has.

An object of the present disclosure is to provide a filter learning device, a filter learning method, and a non-transitory computer-readable medium that can optimize recognition processing using features obtained from the characteristics of light.

### Solution to Problem

A filter learning device according to a first aspect of the present disclosure comprises an optical filter unit for extracting a filter image from images for learning by using a filter condition determined according to a filter parameter, a parameter updating unit for updating the filter parameter by using a result obtained by executing image analysis processing on the filter image, and a sensing unit for sensing an input image by using a physical optical filter that satisfies a filter condition determined according to the updated filter parameter.

A filter learning method according to a second aspect of the present disclosure comprises extracting a filter image from an image for learning by using a filter condition determined according to a filter parameter, updating the filter parameter by using a result obtained by executing image analysis processing on the filter image, and sensing an input image by using a physical optical filter that satisfies a filter condition determined according to the updated filter parameter.

A program according to a third aspect of the present disclosure causes a computer to extract a filter image from an image for learning by using a filter condition determined according to a filter parameter, update the filter parameters with a result obtained by executing image analysis processing on the filter image, and sensing an input image by using a physical optical filter that satisfies a filter condition determined according to the updated filter parameter.

### Advantageous Effect of Invention

According to the present disclosure, it is possible to provide a filter learning device, a filter learning method, and a non-transitory computer-readable medium that can optimize recognition processing using features obtained from the characteristics of light.

### Brief Description of the Drawings

Fig. 1 is a diagram showing a configuration of a filter learning device according to a first example embodiment.
Fig. 2 is diagram showing a configuration of a filter learning device according to a second example embodiment.
Fig. 3 is a diagram showing the flow of learning processing according to the second example embodiment.
Fig. 4 is a diagram showing the flow of estimation processing according to the second example embodiment.
Fig. 5 is a diagram showing a configuration of a filter learning device according to a modification example of the second example embodiment.
Fig. 6 is a diagram showing a configuration of a filter learning device according to a modification example of the second example embodiment.
Fig. 7 is a diagram showing a configuration of a filter learning device according to a modification example of the second example embodiment.
Fig. 8 is a diagram showing a configuration of the filter learning devices according to the respective example embodiments.

### Description of Embodiments

### (First Example Embodiment)

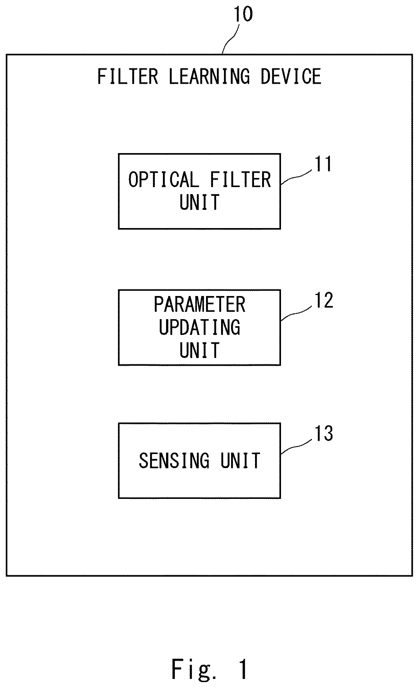

Hereinafter, an example embodiment of this disclosure will be described with reference to the drawings. A configuration example of a filter learning device 10 will be described with reference to Fig. 1. The filter learning device 10 may be a computer device that operates upon execution of a program stored in a memory by a processor. The filter learning device 10 may be used for, for example, image recognition, object detection, segmentation, anomaly detection, image generation, image conversion, image compression, light field generation, three-dimensional image generation, and the like.

The filter learning device 10 includes an optical filter unit 11, a parameter updating unit 12, and a sensing unit 13. Constituent elements of the filter learning device 10 such as the optical filter unit 11, the parameter updating unit 12, and the sensing unit 13 may be software or modules whose processing is executed by the processor executing a program stored in the memory. Alternatively, the parameter updating unit 12 and the sensing unit 13 may be hardware such as a circuit or a chip.

The optical filter unit 11 extracts a filter image from images for learning by using a filter condition determined according to a filter parameter. The optical filter unit 11 is, for example, a filter for simulating an operation of a physical optical filter by using software. The optical filter unit 11 may be referred to as a software filter, for example. The physical optical filter may be referred to as a physical optical filter, a hardware optical filter, or the like. The filter condition may be, for example, to cut light in a specific polarization direction or to transmit light in a specific polarization direction. Alternatively, the filter condition may be to cut light having a specific wavelength or to transmit light having a specific wavelength.

The filter parameter is a parameter to be changed according to a filter condition. For example, when a bandpass filter is considered, the filter parameter may be a wavelength indicating the center of the range of wavelengths to be transmitted, a standard deviation indicating an expanse of the range of wavelengths to be transmitted, and the like. When a long wavelength cut filter or a short wavelength cut filter is considered, the filter parameter may be an optimized function of a shape having a degree of freedom in cutoff wavelength and attenuation width, which includes, for example, a shape obtained by integrating a Gaussian distribution, a sigmoid function having a degree of freedom in a wavelength direction and the like. When a polarizing filter is considered, the filter parameter may be a parameter specifying a polarization direction which allows transmission. Furthermore, a matrix may be created in which wavelength-dependence of actually measured filter transmittance is set as a horizontal axis, and horizontal axes of wavelength-dependence of actually measured filter transmittance are arranged on a longitudinal axis, the number of the horizontal axes being equal to the number of filters, and one or more filters may be selected from this matrix with the parameters in this matrix being fixed at the time of optimization.

Images for learning may be images obtained by imaging actually existing objects, persons, landscapes, etc. with cameras, or may be images generated by executing simulations using a computer. In other words, when the filter learning device 10 is used for image recognition, the images for learning may be images different from an image to be recognized.

The filter image is an image that satisfies a filter condition in the optical filter unit 11. Specifically, the filter image may be an image captured with light transmitted through the optical filter unit 11.

The parameter updating unit 12 updates the filter parameter with a result obtained by executing image analysis processing on a filter image. Deep learning using a neural network which receives a filter image as an input may be executed as the image analysis processing. Alternatively, direct recognition using no function or image processing using an artificially designed HOG feature or the like may be performed as the image analysis processing.

Updating the filter parameter may be paraphrased as feeding back the result obtained by executing the image analysis processing to the filter parameter. By updating the filter parameter, the accuracy of the image analysis processing can be improved.

The sensing unit 13 senses an input image by using a physical optical filter that satisfies a filter condition determined according to an updated filter parameter. The physical optical filter satisfies a filter condition which is substantially similar to that of the optical filter unit 11 whose filter parameter has been updated. The substantially similar filter condition may include an error whose level makes it possible to neglect its effect on subsequent recognition processing. In other words, in the case of the filter condition in the physical optical filter, the wavelength indicating the center of the range of wavelengths to be transmitted, the standard deviation indicating the expanse of the range of wavelengths to be transmitted, and the like may be deviated within the range of errors as compared with the filter condition in the optical filter unit 11. Further, in the case of the filter condition in the physical optical filter, the polarization direction allowing transmission may be deviated within the range of errors as compared with the filter condition in the optical filter unit 11.

The input image is an image obtained by imaging a recognition target using a camera or the like. For example, in the sensing unit 13, filter processing may be executed by using a physical optical filter, or image analysis processing may be executed by using a filter image which has been subjected to filtering. Sensing may be, for example, to execute filter processing to generate an image to be used for image recognition processing.

As described above, the filter learning device 10 according to the first example embodiment can optimize the optical filter unit 11 by changing the filter parameter using the parameter updating unit 12. In other words, the filter learning device 10 can optimize the optical filter unit 11 so as to be capable of executing desired image analysis processing. Further, the physical optical filter used in the filter learning device 10 can satisfy a filter condition similar to that of the optical filter unit 11. In other words, a physical optical filter satisfying a filter condition similar to that of the optical filter unit 11 can be selected as the physical optical filter to be used in the filter learning device 10.

As a result, by using a physical optical filter having a filter condition similar to that of an optimized optical filter unit 11, the filter learning device 10 can execute recognition processing using features obtained from the characteristics of light which a recognition target has.

### (Second Example Embodiment)

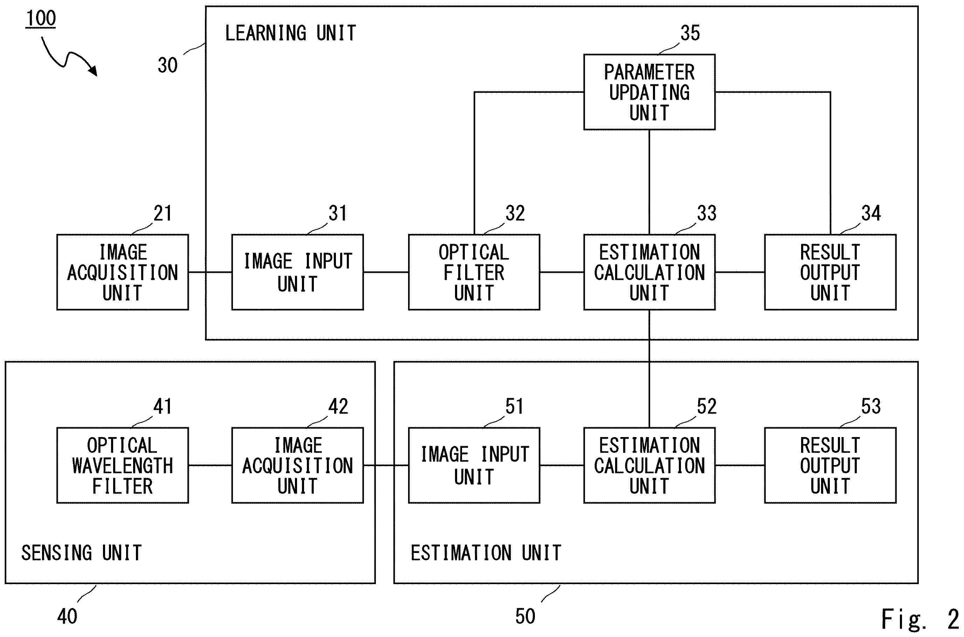

Subsequently, a configuration example of a filter learning device 100 according to a second example embodiment will be described with reference to Fig. 2. In the second example embodiment, the filter learning device 100 will be described as a device for executing image recognition. The filter learning device 100 includes an image acquisition unit 21, a learning unit 30, a sensing unit 40, and an estimation unit 50.

The image acquisition unit 21 may be, for example, a hyperspectral camera. The hyperspectral camera senses an image having verticality, horizontality, and spectral channel information. The spectral channel may be paraphrased as spectral information for each wavelength. When a hyperspectral camera is used, spectrum information for a plurality of wavelengths can be acquired. The image acquisition unit 21 outputs an image acquired by using the hyperspectral camera (hereinafter referred to as a hyperspectral image) to the learning unit 30. Further, the hyperspectral image may be referred to as a luminance image showing the luminance for each wavelength.

The learning unit 30 includes an image input unit 31, an optical filter unit 32, an estimation calculation unit 33, a result output unit 34, and a parameter updating unit 35.

The image input unit 31 receives a hyperspectral image from the image acquisition unit 21. Further, the image input unit 31 outputs the received hyperspectral image to the optical filter unit 32. The optical filter unit 32 simulates the operation of a physical optical wavelength filter by using software. In other words, the optical filter unit 32 simulates a hardware optical wavelength filter. The optical filter unit 32 applies the processing of the simulated optical wavelength filter to the hyperspectral image.

The optical filter unit 32 has a filter for transmitting only light having a specific wavelength therethrough. Further, the optical filter unit 32 may have a filter for transmitting light having wavelengths around a specific wavelength therethrough. Still further, the optical filter unit 32 may have a filter that allows light having a wavelength equal to or higher than a specific wavelength to transmit therethrough. Still further, the optical filter unit 32 may have a filter for transmitting light having a wavelength equal to or lower than a specific wavelength therethrough. Still further, the optical filter unit 32 corresponds to the optical filter unit 11 in Fig. 1. The optical filter unit 32 may simulate one optical wavelength filter, or may simulate two or more optical wavelength filters. The transmittance of the optical wavelength filter simulated by the optical filter unit 32 may follow a Gaussian distribution centered on a specific wavelength. A filter that follows a Gaussian distribution may be referred to as a Gaussian filter. Alternatively, a transmittance distribution at each wavelength of the optical wavelength filter 41 which is a physical optical wavelength filter may be used as the transmittance of the optical filter unit 32. In other words, the transmittance of a plurality of physical optical wavelength filters that may be used as the optical wavelength filter 41 may be simulated as the transmittance of the optical filter unit 32.

The optical filter unit 32 receives a hyperspectral image, and transmits light having a specific wavelength therethrough. Further, the optical filter unit 32 outputs a filter image captured with the transmitted light having the wavelength to the estimation calculation unit 33.

The filter image output by the optical filter unit 32 has three dimensions, for example, verticality, horizontality, and the number of filters. Specifically, when Y is defined as an output of the optical filter unit 32, X is defined as an input of the optical filter unit 32, and W is defined as a filter, Y = XW (Equation 1) can be expressed. W is a matrix in which the horizontal axis represents the spectrum channel and the vertical axis represents the number of filters. The hyperspectral image includes a plurality of wavelength information pieces, and the optical filter unit 32 extracts information on a desired wavelength from the hyperspectral image. In other words, the optical filter unit 32 extracts light having a specific wavelength from light having a plurality of wavelengths. The number of the plurality of wavelengths included in the hyperspectral image is assumed to be a sufficiently larger than the number of the wavelengths extracted in the optical filter unit 32.

The estimation calculation unit 33 uses a learning model determined according to a calculation parameter to perform image analysis processing on a filter image output from the optical filter unit 32. Updating the calculation parameter improves the accuracy of the learning model so as to obtain a desired calculation result. For example, the estimation calculation unit 33 receives a filter image output from the optical filter unit 32 to execute a calculation using a convolutional neural network. The estimation calculation unit 33 outputs a calculation result to the result output unit 34. The convolutional neural network to be executed in the estimation calculation unit 33 may have various structures. For example, VGG or Resnet may be used for the estimation calculation unit 33. Alternatively, a trained neural network may be used for the estimation calculation unit 33.

The result output unit 34 generates an estimation result, and outputs the generated estimation result to the parameter updating unit 35. For example, the result output unit 34 executes object recognition for recognizing a red color. Specifically, the result output unit 34 outputs an output of the sigmoid function so as to output a value near to "1" when the color of the filter image output by the optical filter unit 32 is red, and output a value near to "0" when the color is other than the red color.

The parameter updating unit 35 uses an estimation result received from the result output unit 34 to optimize the filter parameter to be used in the optical filter unit 32 and the parameter of the neural network to be used in the estimation calculation unit 33. The parameter updating unit 35 corresponds to the parameter updating unit 12 in Fig. 1. For example, in order to improve the accuracy of object recognition for recognizing a red color, the parameter updating unit 35 calculates a gradient of each parameter by using, as feedback information, a loss function which is a comparison result between the estimation result received from the result output unit 34 and correct answer data held in advance. The parameter updating unit 35 optimizes the filter parameter and the neural network parameter by using a calculation result. The correct answer data is, for example, a numerical value of correct answer data 1 indicating the red and a numerical value of correct answer data 0 indicating other colors in the case of object recognition for recognizing the red. The pair of input data and correct answer data may be referred to as training data to be used in machine learning, for example. The filter parameter may be, for example, a parameter indicating the center wavelength and standard deviation in the distribution of transmittance. In other words, the filter parameter may be wavelength information indicating a transmission region. The neural network parameter may be, for example, weight information, bias information or the like, or a combination thereof.

Further, the parameter updating unit 35 may be paraphrased as optimizing the neural network configured by using the optical filter unit 32 and the estimation calculation unit 33. In this case, the parameter updating unit 35 optimizes the entire neural network under a constraint condition that the optical filter unit 32 is optimized so that the spectral channel in Equation 1, that is, the wavelength transmittance approaches to an actually existing optical filter characteristic. Here, the parameter updating unit 35 optimizes the optical filter unit 32 and the estimation calculation unit 33. Therefore, the neural network parameter in the estimation calculation unit 33 is optimized so as to be different from a neural network parameter to be used for general image recognition in which the optical filter unit 32 is not optimized.

The sensing unit 40 has an optical wavelength filter 41 and an image acquisition unit 42. The sensing unit 40 corresponds to the sensing unit 13 in Fig. 1. The sensing unit 40 applies the optical wavelength filter 41 to an input image obtained by imaging a recognition target object, a landscape or the like with a camera or the like. The camera for generating the input image is not limited to hyperspectral camera. An optical wavelength filter having a characteristic closest to that of the optical filter unit 32 optimized in the learning unit 30 is applied as the optical wavelength filter 41. The closest characteristic may be that the optical wavelength filter 41 and the optical filter unit 32 have substantially similar filter conditions. Specifically, the closest characteristic may be that the difference between the center wavelength and standard deviation of wavelengths transmitted through the optical filter unit 32 and the center wavelength and standard deviation of wavelengths transmitted in the optical wavelength filter 41 is within a predetermined value. In other words, the difference between the transmittance distribution in the optical filter unit 32 and the transmittance distribution in the optical wavelength filter 41 may be within a predetermined value. Further, when the optical filter unit 32 is simulated so as to have a filter condition which is identical to the filter condition of the physical optical wavelength filter to be used as the optical wavelength filter 41, the optical wavelength filter 41 and the optical filter unit 32 have the same filter condition. The optical wavelength filter 41 outputs a filter image captured with light having transmitted wavelengths to the image acquisition unit 42.

The optical wavelength filter 41 may be a simple wavelength filter or a wavelength filter which allows transmission of a plurality of colors therethrough. Further, light to be transmitted through the optical wavelength filter 41 is not limited to visible light, and the optical wavelength filter 41 may be a filter that allows transmission of light in the near-ultraviolet region or near-infrared region to which an image sensor has sensitivity. Further, the optical wavelength filter 41 may be a color filter which is directly embedded in an image sensor. In this case, when an application field such as object recognition or object detection is predetermined at the time when the image sensor is designed, the sensor design may be performed by selecting the optical wavelength filter 41 based on a result obtained by optimization using the learning unit 30.

The image acquisition unit 42 may be an image sensor having no optical wavelength filter. For example, the image acquisition unit 42 may be a silicon image sensor having a sensitivity of 400 nm to 1000 nm. When the optical wavelength filter is directly embedded in the image sensor, the optical wavelength filter 41 and the image acquisition unit 42 may constitute an integral type image sensor. The image sensor may be formed of, for example, gallium arsenide having sensitivity to infrared rays.

The estimation unit 50 includes an image input unit 51, an estimation calculation unit 52, and a result output unit 53. The image input unit 51 receives an image sensed by the image acquisition unit 42. The image acquisition unit 42 outputs the received image to the estimation calculation unit 52.

The estimation calculation unit 52 performs an operation using the parameter of the estimation calculation unit 33 which has been optimized in the learning unit 30. The estimation calculation unit 52 outputs the calculation result to the result output unit 53.

The estimation calculation unit 52 as well as the optical wavelength filter 41 is optimized for image recognition processing. Here, the estimation processing or the recognition processing to be executed in the estimation calculation unit 52 will be described. For example, in the case of recognition of a red object, the estimation accuracy is generally more improved by use of an RGB image rather than use of a gray image because the amount of information is larger. Further, the respective parameters of the optical wavelength filter 41 and the estimation calculation unit 52 are optimized to perform recognition of a red object. Therefore, the estimation calculation unit 52 receives, as a gray image, an image in a wavelength region where a red object is most easily recognized. In this case, the estimation calculation unit 52 can improve the estimation accuracy as compared with the case of using a gray image generated from light which has not been transmitted through the optical wavelength filter 41 optimized to recognize a red object. The optical wavelength filter 41 can be extended not only to the red, but also to infrared rays and the like. In this case, the estimation calculation unit 52 is also optimized to a parameter different from that of the neural network using an RGB image as an input. Note that the estimation calculation unit 52 may be fine-tuned by using images obtained by the optical wavelength filter 41 and the image acquisition unit 42.

The result output unit 53 outputs an estimation result obtained in the same manner as the result output unit 34. Specifically, when the color of a filter image output by the optical wavelength filter 41 is red, 1 is output, and when the color is any other color, 0 is output.

The filter learning device 100 of Fig. 2 uses the optical wavelength filter 41 which transmits light of a specific wavelength therethrough. However, a polarizing filter may be used in the case of transmitting light in a specific polarization direction. In this case, the input image may be captured by using a modified camera.

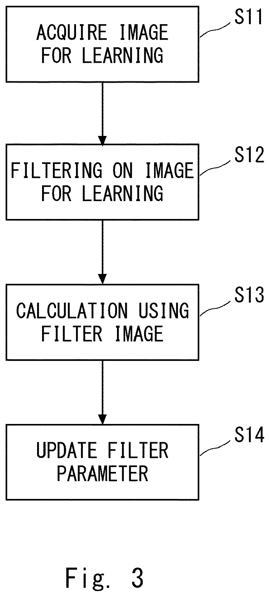

Subsequently, the flow of the learning processing to be executed in the learning unit 30 according to the second example embodiment will be described with reference to Fig. 3. First, the image acquisition unit 21 acquires images for learning (S11). For example, the image acquisition unit 21 acquires a hyperspectral image as an image for learning by using a hyperspectral camera.

Next, the optical filter unit 32 applies a filter condition determined based on a predetermined filter parameter to the image for learning to perform filtering on the image for learning (S12). For example, the optical filter unit 32 transmits light having a specific wavelength and wavelengths around the specific wavelength therethrough.

Next, the estimation calculation unit 33 performs a calculation using a filter image captured with light transmitted through the optical filter unit 32 (S13). For example, the estimation calculation unit 33 performs a calculation using a convolutional neural network.

Next, the parameter updating unit 35 updates the filter parameter in the optical filter unit 32 by using an estimation result as to whether the calculation result in the estimation calculation unit 33 shows red or not, and correct answer data (S14). Further, the parameter updating unit 35 also updates the parameter in the estimation calculation unit 33 with the estimation result and the correct answer data.

The learning unit 30 repeats the processing of steps S11 to S14, and updates the parameters in the optical filter unit 32 and the estimation calculation unit 33, thereby improving the estimation accuracy of the images for learning.

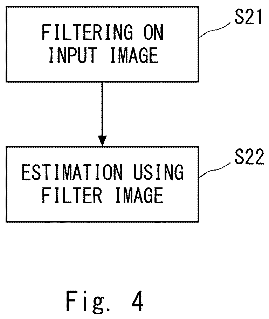

Subsequently, the flow of the estimation processing in the sensing unit 40 and the estimation unit 50 will be described with reference to Fig. 4. The estimation processing may be paraphrased as recognition processing. It is assumed that the sensing unit 40 uses an optical wavelength filter 41 having a filter condition which is substantially similar to that of the optical filter unit 32 whose filter parameter has been updated in the learning unit 30. Further, it is assumed that the estimation unit 50 applies, to the estimation calculation unit 52, a parameter identical to a parameter which has been updated in the estimation calculation unit 33 of the learning unit 30.

First, the optical wavelength filter 41 filters an input image obtained by imaging a recognition target (S21). The optical wavelength filter 41 applies, to the input image, a filter condition similar to a filter condition to be applied in the optical filter unit 32. Further, the sensing unit 40 outputs, to the estimation unit 50, a filter image which satisfies a filter condition and is captured with transmitted light.

Next, the estimation calculation unit 52 performs estimation processing using the filter image (S22). Specifically, the estimation calculation unit 52 may perform processing of estimating whether an object reflected in the filter image is a red object.

As described above, the learning unit 30 of the filter learning device 100 can optimize the filter parameter of the optical filter unit 32 and the parameter of the neural network used in the estimation calculation unit 33. In this way, it is also possible to optimize the wavelength of light to be transmitted by optimizing not only the neural network, but also the filter parameters.

An optical wavelength filter having a characteristic similar to that of the optical filter unit 32 which has been optimized in the learning unit 30 is used as the optical wavelength filter 41 to be used in the sensing unit 40. Therefore, the estimation unit 50 can perform the estimation processing by using an image captured with light transmitted through the optical wavelength filter which has been optimized when a recognition target is recognized. As a result, the estimation unit 50 can improve the accuracy of the estimation processing.

The image to be received by the sensing unit 40 is not limited to a hyperspectral image. Therefore, since it is not necessary to use a hyperspectral camera to generate images to be used in the sensing unit 40 and the estimation unit 50, it is possible to perform inexpensive estimation processing as compared with a case where the hyperspectral camera is used for the estimation processing.

By optimizing the optical filter unit 32, the filter learning device 100 can transmit light having a wavelength required for analyzing a recognition target through the optical filter unit 32. As a result, the filter learning device 100 can extract features for recognition with high accuracy by a wavelength at which blood vessels in the skin can be easily visualized, a wavelength at which plants can be easily identified, etc. depending on the wavelength of the reflection characteristic of the recognition target.

### (Modification Example of Second Example Embodiment)

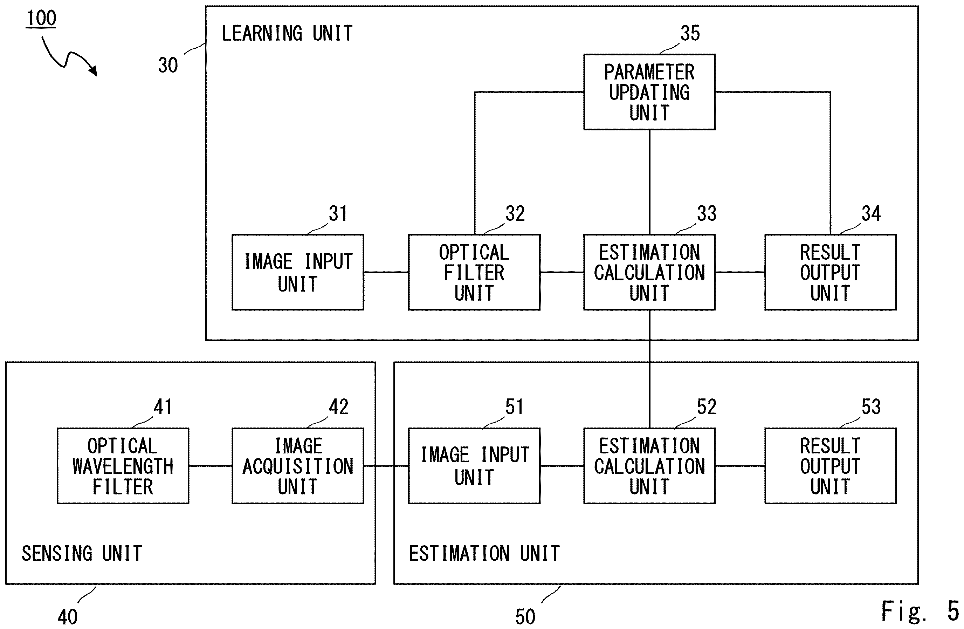

As shown in Fig. 5, the image acquisition unit 21 may be omitted in the filter learning device 100 described with reference to Fig. 2. In other words, the filter learning device 100 may have a configuration having no hyperspectral camera as shown in Fig. 5. In this case, the image input unit 31 may output the hyperspectral image data stored in a storage medium such as a hard disk of a computer to the optical filter unit 32. The optical filter unit 32 applies a predetermined filter condition to data output from the image input unit 31.

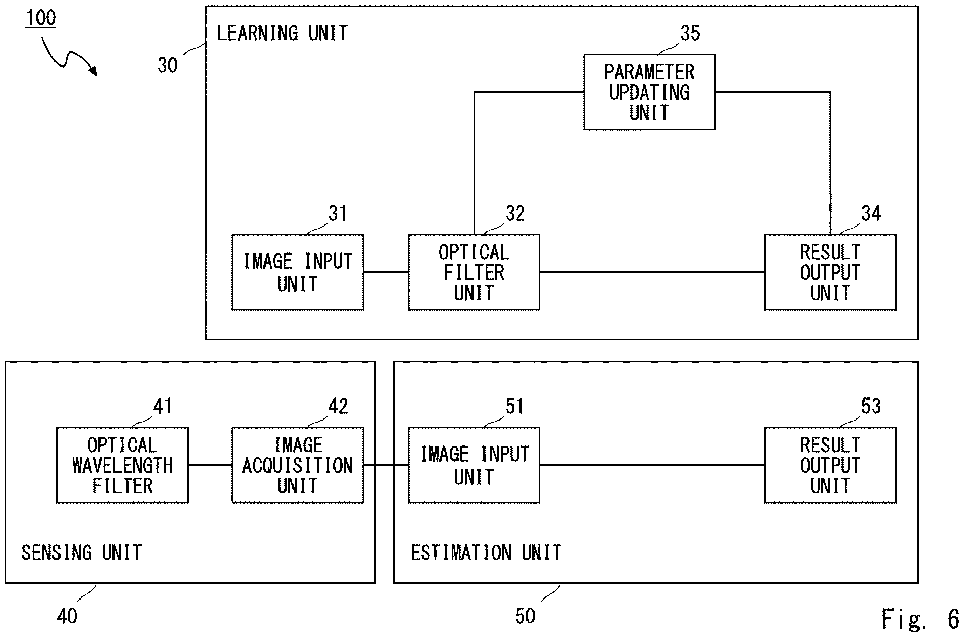

Further, as shown in Fig. 6, the estimation calculation unit 33 and the estimation calculation unit 52 may be further omitted from the filter learning device 100 of Fig. 5. Alternatively, the estimation calculation unit 33 and the estimation calculation unit 52 may be omitted from the filter learning device 100 of Fig. 2. In this case, the parameter updating unit 35 updates the filter parameter of the optical filter unit 32 to optimize the optical filter unit 32. The optical wavelength filter 41 is selected based on the optimized optical filter unit 32. Further, in the filter learning device 100 of Fig. 6, the result output unit 34 and the result output unit 53 are not limited to a machine learning method such as a neural network, and direct recognition using no function or image processing using an artificially designed HOG feature or the like may be performed.

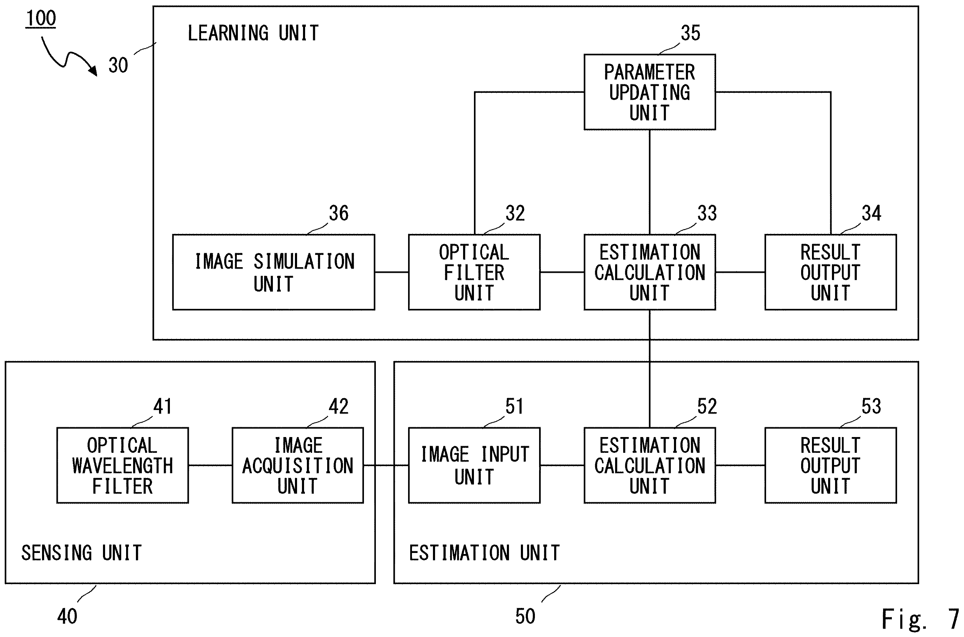

Further, as shown in Fig. 7, the filter learning device 100 may have an image simulation unit 36 instead of the image acquisition unit 21 and the image input unit 31 in the filter learning device 100 of Fig. 2. The image simulation unit 36 simulates an optical space (optical simulation) to generate a hyperspectral image.

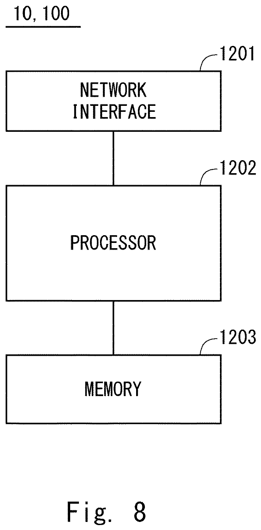

Fig. 8 is a block diagram showing a configuration example of the filter learning device 10 and the filter learning device 100 (hereinafter referred to as the filter learning device 10 and the like). Referring to Fig. 8, the filter learning device 10 and the like include a network interface 1201, a processor 1202, and a memory 1203. The network interface 1201 is used to communicate with other network node devices constituting the communication system. The network interface 1201 may include, for example, a network interface card (NIC) conformed to the IEEE 802.3 series. Alternatively, network interface 1201 may be used to perform wireless communication. For example, the network interface 1201 may be used to perform wireless LAN communication or mobile communication defined in 3GPP (3rd Generation Partnership Project).

The processor 1202 reads software (a computer program) from the memory 1203 and executes the software to perform processing of the filter learning device 10 and the like described by using the flowcharts or the sequences in the above-described example embodiments. The processor 1202 may be, for example, a microprocessor, an MPU (Micro Processing Unit), or a CPU (Central Processing Unit). The processor 1202 may include a plurality of processors.

The memory 1203 is configured by combining a volatile memory and a nonvolatile memory. The memory 1203 may include a storage located away from the processor 1202. In this case, the processor 1202 may access the memory 1203 via an I/O interface (not shown).

In the example of Fig. 8, the memory 1203 is used to store a software module group. The processor 1202 can perform the processing of the filter learning device 10 and the like described in the above-described example embodiments by reading the software module group from the memory 1203 and executing the software module group.

As described with reference to Fig. 8, each of the processors included in the filter learning device 10 and the like executes one or more programs including a group of commands for causing a computer to perform algorithms described with reference to the figures.

In the above example, programs can be stored by using various types of non-transitory computer readable media, and supplied to a computer. The non-transitory computer-readable media include various types of tangible storage media. Examples of the non-transitory computer-readable media include a magnetic recording medium, a magneto-optical recording medium (for example, magneto-optical disk), CD-ROM (Read Only Memory), CD-R, CD-R/W, and a semiconductor memory. The magnetic recording medium may be, for example, a flexible disk, a magnetic tape, or a hard disk drive. The semiconductor memory may be, for example, a mask ROM, PROM (Programmable ROM), EPROM (Erasable PROM), a flash ROM, or RAM (Random Access Memory). The program may also be supplied to the computer by various types of transitory computer-readable media. Examples of transitory computer-readable media include electrical signals, optical signals, and electromagnetic waves. The transitory computer-readable media can supply the program to the computer via a wired communication path such as an electric wire and an optical fiber, or a wireless communication path.

Note that this disclosure is not limited to the above-described example embodiments, and can be modified as appropriate without departing from the gist.

A part or all of the above example embodiments may also be described in accordance with the following supplementary notes, but are not limited to the following supplementary notes.

### (Supplementary note 1)

A filter learning device comprises:
optical filter means for extracting a filter image from images for learning by using a filter condition determined according to a filter parameter;
parameter updating means for updating the filter parameter by using a result obtained by executing image analysis processing on the filter image; and
sensing means for sensing an input image by using a physical optical filter that satisfies a filter condition determined according to the updated filter parameter.

### (Supplementary note 2)

In the filter learning device described in Supplementary note 1, the optical filter means is configured to use the filter parameter to simulate an optical wavelength filter which is the physical optical filter.

### (Supplementary note 3)

In the filter learning device described in Supplementary note 1, the optical filter means is configured to use the filter parameter to simulate a polarizing filter which is the physical optical filter.

### (Supplementary note 4)

The filter learning device described in any one of Supplementary notes 1 to 3 further comprises estimation means for executing image analysis processing on the filter image by using a learning model determined according to a calculation parameter, wherein the parameter updating means is configured to update the filter parameter and the calculation parameter.

### (Supplementary note 5)

In the filter learning device described in Supplementary note 4, the parameter updating means is configured to be optimized under a constraint condition that the optical wavelength filter in the optical filter means is simulated.

### (Supplementary note 6)

In the filter learning device described in any one of Supplementary notes 1 to 5, the image for learning is an image captured by using a hyperspectral camera.

### (Supplementary note 7)

In the filter learning device described in any one of Supplementary notes 1 to 5, the image for learning is an image obtained by executing an optical simulation.

### (Supplementary note 8)

A filter learning method comprises:
extracting a filter image from an image for learning by using a filter condition determined according to a filter parameter;
updating the filter parameter by using a result obtained by executing image analysis processing on the filter image; and
sensing an input image by using a physical optical filter that satisfies a filter condition determined according to the updated filter parameter.

### (Supplementary note 9)

In the filter learning method described in Supplementary note 7, image analysis processing on the filter image is executed by using a learning model determined according to a calculation parameter after the filter image is extracted, and the filter parameter and the calculation parameter are updated with a result obtained by executing image analysis processing.

### (Supplementary note 10)

A non-transitory computer-readable medium having a program stored therein, the program causing a computer to:
extract a filter image from an image for learning by using a filter condition determined according to a filter parameter;
update the filter parameters with a result obtained by executing image analysis processing on the filter image; and
perform sensing an input image by using a physical optical filter that satisfies a filter condition determined according to the updated filter parameter.

### Reference Signs List

- 10: Filter learning device
- 11: Optical filter unit
- 12: Parameter updating unit
- 13: Sensing unit
- 21: Image acquisition unit
- 30: Learning unit
- 31: Image input unit
- 32: Optical filter unit
- 33: Estimation calculation unit
- 34: Result output unit
- 35: Parameter updating unit
- 36: Image simulation unit
- 40: Sensing unit
- 41: Optical wavelength filter
- 42: Image acquisition unit
- 50: Estimation unit
- 51: Image input unit
- 52: Estimation calculation unit
- 53: Result output unit
- 100: Filter learning device

## Claims

1. A filter learning device comprising:
optical filter means for extracting a filter image from images for learning by using a filter condition determined according to a filter parameter;
parameter updating means for updating the filter parameter by using a result obtained by executing image analysis processing on the filter image; and
sensing means for sensing an input image by using a physical optical filter that satisfies a filter condition determined according to the updated filter parameter.

2. The filter learning device according to Claim 1, wherein the optical filter means is configured to use the filter parameter to simulate an optical wavelength filter which is the physical optical filter.

3. The filter learning device according to Claim 1, wherein the optical filter means is configured to use the filter parameter to simulate a polarizing filter which is the physical optical filter.

4. The filter learning device according to any one of Claims 1 to 3, further comprising estimation means for executing image analysis processing on the filter image by using a learning model determined according to a calculation parameter,
wherein the parameter updating means is configured to update the filter parameter and the calculation parameter.

5. The filter learning device according to Claim 2, wherein the parameter updating means is configured to be optimized under a constraint condition that the optical wavelength filter in the optical filter means is simulated.

6. The filter learning device according to any one of Claims 1 to 5, wherein the image for learning is an image captured by using a hyperspectral camera.

7. The filter learning device according to any one of Claims 1 to 5, wherein the image for learning is an image obtained by executing an optical simulation.

8. A filter learning method comprising:
extracting a filter image from an image for learning by using a filter condition determined according to a filter parameter;
updating the filter parameter by using a result obtained by executing image analysis processing on the filter image; and
sensing an input image by using a physical optical filter that satisfies a filter condition determined according to the updated filter parameter.

9. The filter learning method according to Claim 8, wherein
image analysis processing on the filter image is executed by using a learning model determined according to a calculation parameter after the filter image is extracted, and
the filter parameter and the calculation parameter are updated with a result obtained by executing image analysis processing.

10. A non-transitory computer-readable medium having a program stored therein, the program causing a computer to:
extract a filter image from an image for learning by using a filter condition determined according to a filter parameter;
update the filter parameters with a result obtained by executing image analysis processing on the filter image; and
perform sensing an input image by using a physical optical filter that satisfies a filter condition determined according to the updated filter parameter.
